# EUROPEAN PATENT SPECIFICATION

(11) **EP 2 865 631 B1**
(45) Date of publication and mention of the grant of the patent: **27.07.2016**
(21) Application number: 13190345.2
(22) Date of filing: 25.10.2013
(51) Int. Cl.: B66C 23/18, F03D 1/00

(54) **Lifting jig and method**
Hebegestell und Verfahren
Gabarit de levage et procédé

(43) Date of publication of application: 29.04.2015
(73) Proprietor: SAL Offshore B.V., 2612 PA Delft (NL)
(72) Inventor: Nicolson, Charles, 2612 PA Delft (NL)
(74) Representative: De Vries & Metman

(56) References cited:
- WO-A1-2013/008986
- WO-A2-98/10145
- DE-U1-202009 006 507

## Description

### TECHNICAL FIELD

The present disclosure relates to lifting and transferring loads, in particular tall loads such as foundation piles, jackets, tripods, masts, wind power generators, antennas, refinery reactor columns and the like. The present disclosure relates in particular to lifting and transferring loads off shore.

### BACKGROUND

For centuries man has used cranes and/or other tackles for supporting and lifting objects. With increasingly taller objects and/or increasing lifting heights, the support points for supporting the tackles have to be raised and cranes have increased. For very tall loads and/or complex situations special constructions may be required.

E.g., for lifting and transferring wind power generators off-shore dedicated constructions and vessels have been developed, such as disclosed in WO 2011/028102, CN 102,464,273, CA 2,752,960 and WO 2012/039889.

Another solution is adaptation of the load and providing lowered support points. E.g. WO 2013/008986 discloses a lifting jig for transferring a wind power generator and a method for installing the offshore wind power generator using the lifting rig. The offshore wind power generator according to WO 2013/008986 includes a blade, a nacelle including a power generator for generating power by the rotation of the blade, and a tower supporting the nacelle and installed on a support structure installed offshore. Also, the offshore wind power generator includes a tower support structure installed on the tower so that the tower is lifted using a predetermined transfer unit in a state where the blade, the nacelle, and the tower are integrally assembled. The tower support structure is disposed above a centre of gravity of the wind power generator at which the blade, nacelle, and the tower are integrally assembled.

However, adaptation of the tower by providing it with the tower support structures complicates design and manufacturing of the tower and it increases costs of the wind power generator. Moreover, the tower support structures interrupt the structure of the tower outside of the tower support structures and can cause weak spots in the towers. In wind parks comprising several tens to hundreds of wind power generators such elevated costs and risks can be prohibitive. Similar arguments apply to other tall loads.

Improvements in handling and lifting tall loads, in particular off shore, are therefore desired.

### SUMMARY

Herewith, a lifting jig and a method are provided according to the appended claims.

In particular, a lifting jig for lifting at least part of a load is provided, wherein the lifting jig comprises a plurality of first connectors and one or more second connectors. The first connectors are for connecting one or more hoisting devices to the lifting jig in plural positions. The one or more second connectors are for connecting the lifting jig to a load. The lifting jig is configured to support the second connector(s) above the first connectors when the lifting jig is suspended by the first connectors, in particular with the centre of gravity of the lifting jig being positioned above the first connectors.

The lifting jig allows raising the second connectors above the maximum elevation of the first connectors. Thus, the second connectors may be raised above the maximum elevation that can be achieved by the hoisting devices themselves. Therewith, the lifting jig facilitates lifting relatively tall loads with relatively low hoisting devices that could otherwise not directly lift the loads. Further, the lifting jig facilitates connecting to lifting points on the load that may be, or may become during lifting, higher than the maximum elevation of the first connectors. In particular, the lifting points on the load may be located at or near a top of the load, so that addition of hoisting connectors to the load, e.g. halfway the height of load, may be obviated.

The hoisting devices may comprise, e.g., cranes, capstans, winches and/or tackles provided with one or more hooks, cable loops, shackles and/or other free suspension hoisting systems not relying on rails, fixed guides etc. and the first connectors may suitably comprise hooks, eyes, shackles, cable loops, trunnions etc., wherein the connection may be based on hooking, shackling, slinging, tying and/or knotting etc. The second connectors may comprise load engagement structures, in particular hooks, pins, eyes, shackles, loops, ridges, latches, edges etc. Preferably the second connectors facilitate a substantially fixing connection between the lifting jig and the load. Also or in addition load guides and/or further connection systems such as tying cables, chains, etc. are provided between the lifting jig and the load. Thus, the liftig jig and the load can be fixed together substantially tightly and advantageously substantially immovably, which facilitates handling of the assembly and increases safety and/or feasibility of lifting the load.
The (first connectors of the) lifting jig may advantageously be configured for connecting two or more hoisting devices, suitably arranged around the lifting jig for balancing the jig and the load with respect to the first connectors. This facilitates free lifting and manipulation of the lifting jig, without contact with guiding structures. For (use with) two hoisting devices the first connectors may be positioned spaced around (an axis through) the centre of gravity lifting jig such that the weight of the lifting jig and preferably of the assembly of the lifting jig and a connected load can be distributed evenly and/or in accordance with the hoisting capacities of the used hoisting devices. For (use with) two hoisting devices the first connectors may be arranged opposite each other with respect to an axis of symmetry of the lifting jig and/or a plane through a centre of gravity of the lifting jig.

The lifting jig may comprise one or more struts, in particular a frame comprising one or more struts, extending generally in vertical direction and arranged for supporting the second connectors above the first connectors. The struts may determine a height of the lifting jig. An open structure reduces weight and it may reduce (effect of) wind forces which may be particularly relevant for offshore use.

In an embodiment, at least some of the first and second connectors are separated from each other by a separation distance and wherein the separation distance is adjustable. For instance, the lifting jig may comprise one or more hoisting systems for hoisting one or more second connectors with respect to one or more first connectors. Further, the lifting jig may be deformable, e.g. having one or more deformable struts which may be realised by hydraulic cylinders, screw-thread spindles, etc. A deformable strut may comprise one or more telescoping sections and/or hinged jack sections. Preferably, such adjustment is remotely controllable, and the lifting jig may comprise and/or be connectable with one or more suitable adjustment actuator systems, such as winches, spindle motors and/or hydraulic systems which may include pumps, reservoirs and the like.

In an embodiment, the lifting jig defines a space for receiving at least part of the load and wherein in particular at least part of the lifting jig is arranged to be at least partly reversibly opened, deformed and/or disassembled for introducing at least part of the load into the space, in particular facilitating introduction in generally horizontal direction. By receiving (part of) the load in the space, the jig can at least partly surround the load and possibly protect the load. Further, such lifting jig facilitates an even distribution of forces over the lifting jig. A lifting jig that can be opened, deformed and/or (partly) disassembled for introduction of the load facilitates introducing the load into the space sideways, which can obviate having to introduce the load into the space by lifting the lifting jig over (a top of) the load; thus delicate loads and/or loads having complicated shapes, such as wind power generators with extending blades can be accommodated and use of tall hoisting devices for lifting the lifting jig above, and arranging the lifting jig over, the load may not be required.

In an embodiment the lifting jig comprises one or more third connectors for connecting one or more hoisting devices such as cranes, capstans, winches and/or tackles, to the lifting jig, possibly in plural positions, wherein the third connectors are positioned above the centre of gravity of the lifting jig, relative to its normal operating position, in particular at, near or above the second connectors. This facilitates hoisting the lifting jig, in particular if the first connectors are positioned below the centre of gravity of the lifting jig in operational orientation.

In an embodiment, the lifting jig comprises one or more controllers configured to connect and/or disconnect one or more of the first connectors to / from a hoisting connector and/or configured to connect and/or disconnect one or more of the second connectors to / from a load connector. Thus, connection and/or disconnection of the lifting jig and/or the load is facilitated. This also facilitates offshore use, wherein the lifting jig may be used for positioning the load aside a vessel and/or below a water surface.

In an embodiment, the lifting jig may comprise one or more adjustable and/or removable ballasting systems, in particular comprising one or more ballast containers, more in particular for holding a liquid, e.g. for holding and/or scooping up sea water. Such ballasting systems facilitate adjusting mass distribution and the position of a centre of gravity of (part of) the lifting jig and/or an assembly of the lifting and a connected load. In offshore situations sea water is readily available. In case of liquid ballast, the ballast system should preferably be closable, more preferably enclosed and possibly partitioned, to prevent sloshing and/or loss of ballast water.

The lifting jig may comprise one or more sensors and/or controllers, e.g. one or more seabed scanners, (video-) camera systems, transponders, motion and/or acceleration sensors, inclination sensors, position sensors, such as GPS, connections for connecting a remotely operable vehicle. Also or alternatively the lifting jig also comprises one or more transmitters and/or receivers for communicating sensor signals and/or controller signals to and/or from an operator, e.g. aboard a vessel comprising one of the hoisting devices. Such communication may be via one or more cables, e.g. in a control umbilical, and/or wireless communication. This facilitates retrieving information from and/or submitting information to the lifting jig. In a particular embodiment, such sensors and/or controllers may be operably connected with one or more hoisting device operators so as to adjust a position and/or orientation of the lifting jig with respect to a reference. E.g., in case of lifting the lifting jig (possibly with a load connected) with two cranes on opposite sides of the lifting jig, one crane may be activated by an operator as a master crane and the other crane may be activated as a slave crane controlled by the master crane and/or one or more signals from the lifting jig, so as to maintain a relative position and/or orientation of the lifting rig with respect to the master crane (and/or its connection with the lifting rig). Instead of two cranes, more and/or other hoisting devices may be used, of which one or more may be operated as slave hoisting devices to one or more master hoisting devices.

In an embodiment, the lifting jig comprises at least one passive heave compensation system and/or at least one active heave compensation system. This may obviate (use of) an additional heave compensation system in the hoisting system itself, e.g. within a crane and/or suspended from a crane between the crane hook and the lifting jig. Although one or more such heave compensation systems may be arranged to act on or before the first connectors and/or on or after the second connectors relative to the hoisting system, at least one of such passive and/or active heave compensation systems may be arranged to act between the first and second connectors, so as to affect motion of the second connectors with respect to the first connectors. This obviates introduction of a heave compensation system in one or more of the hoisting devices. In particular, at least one of the passive and/or active heave compensation systems may be integrated into the lifting jig. This may significantly increase available lifting height of the lifting jig by the hoisting system(s).

In an embodiment, one or more struts between the first and second connectors may comprise a passive and/or active heave compensation. In case the lifting jig is suspended from two cranes aboard one or two vessels, three, four, six or another number of struts may be provided to support the second connectors above the first connectors wherein the struts are operated as linear actuators so as to compensate for motion in one or more of the six degrees of freedom: translation in three mutually perpendicular dimensions and rotation in roll, pitch and jaw. In a particular case, the lifting jig may thus be provided as a Stewart platform wherein motion of the load with respect to a reference, e.g. a sea bed or a support mounted on the sea bed, may be largely compensated and reduced.

The lifting jig may further comprise at least part of one or more grouting systems, guiding systems such as load guides and/or remotely operable actuators, e.g. a remotely operable gripper and/or arm. Thus, the lifting jig may be used for effecting further actions and may itself become an intermediate base for actions. This may reduce costs and/or risks relative to using a remotely operated vehicle and/or having human intervention in situ, which may require transfer to and from the operating site. However, the lifting jig may comprise provisions for accommodating one or more human operators. The grouting system may comprise one or more umbilicals, nozzle controllers (e.g. a shutter), controllers, (remotely operable) release systems and the like. This obviates providing grouting systems to the load and/or load supports.

Further, a method for lifting at least part of a load is provided herewith. The method comprises providing one or more hoisting devices having one or more hoisting connectors and providing substantially rigid support members, such as rigid struts, connected to first connectors and second connectors and being adapted to support the load when that is connected to the second connectors, in particular being comprised in a lifting jig as provided herein. The method further comprises connecting the hoisting devices to the first connectors and the load to the one or more second connectors, and lifting at least part of the load by the support members, in particular suspending the lifting jig by the first connectors from the hoisting devices with the one or more second connectors positioned above the first connectors, in particular with the centre of gravity of the support members or the lifting jig, respectively, being positioned above the first connectors. Thus, loads may be lifted that are taller than the hoisting devices and/or to heights above the hoisting devices.

In an embodiment, the method comprises the step of forming at least part of the lifting jig around at least part of the load such that the lifting jig defines a space receiving at least part of the load and hoisting the formed lifting jig with the load, such method may in particular comprise the steps of at least partially opening, deforming and/or disassembling the lifting jig, receiving at least part of the load in the space in the lifting jig, and closing, reforming and/or (re-)assembling the lifting jig around at least part of the load in the space.

In an embodiment, the method comprises connecting an elongated load having a direction of elongation to the second connectors, and, by suspending from and hoisting with the hoisting devices the lifting jig by the first connectors, erecting the elongated load with respect to the direction of elongation from a first orientation that is generally horizontal or has comparatively little inclination relative to a horizontal direction, to a second orientation that is generally vertical or has comparatively large inclination relative to a horizontal direction. Thus, relatively tall loads may be erected or oriented to a desired orientation with relatively low hoisting devices. For this, or other uses, the one or more second connectors may comprise or be attached to one or more swivels enabling rotation of a connection direction of the respective second connector(s) and/or a connected load with respect to one or more other portions of the lifting jig.

In an embodiment, the method comprises attaching an adjustable ballast weight to the lifting jig and/or the load, so as to adjust a centre of gravity for the lifting jig and/or a connected load, and/or applying a downward force to the lifting jig and/or the load. This facilitates stable and controllable hoisting of the lifting jig and/or the assembly, with the centre of gravity of the lifting jig being above the first connectors. Such downwards force may be suitably derived from one or more (connections with) ground based objects, tugger winches, capstans and/or other constructions such as (movable) installation weights.

An embodiment of the method comprises use of a lifting jig as provided herein, comprising one or more sensors and/or controllers, e.g. one or more seabed scanners, (video-) camera systems, transponders, motion and/or acceleration sensors, inclination sensors, position sensors and/or comprising at least one transmitter and/or receiver, wherein the method comprises using plural controllable hoisting devices to hoist the lifting jig possibly with a load connected to the lifting jig, and further comprising operating at least one of the controllable hoisting devices as a master hoisting device and another one of the controllable hoisting devices as a slave hoisting device to the master hoisting device and/or one or more signals from the lifting jig. This facilitates arranging and/or maintaining the lifting jig and/or load in a particular position and/or orientation.

### BRIEF DESCRIPTION OF THE DRAWINGS

The above-described aspects will hereafter be more explained with further details and benefits with reference to the drawings showing an embodiment of the invention by way of example.
Fig. 1 is a side view of an assembly comprising two cranes and a load interconnected with a lifting jig;
Fig. 2 is a perspective view of an assembly generally according to Fig. 1;
Fig. 3 is a side view of an embodiment of a lifting jig;
Fig. 4 is a side view of an embodiment of a lifting jig, partly disassembled;
Fig. 5 is a side view of the lifting rig of Fig. 4 and a load partly received in the lifting rig;
Fig. 6-7 are side views of further embodiments of lifting jigs;
Fig. 8 is a side view of yet another embodiment of a lifting jig with a load partly received in the lifting rig.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to gravity and the embodiments in normal use and operation as oriented in the drawings, unless otherwise specified. Further, elements that are at least substantially identical or that perform an at least substantially identical function are denoted by the same numeral.

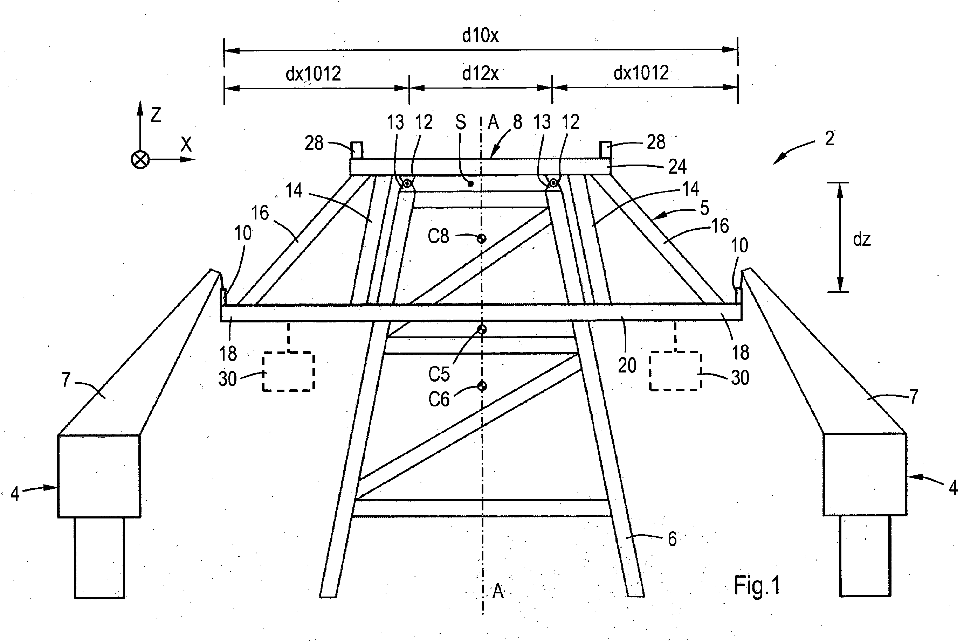

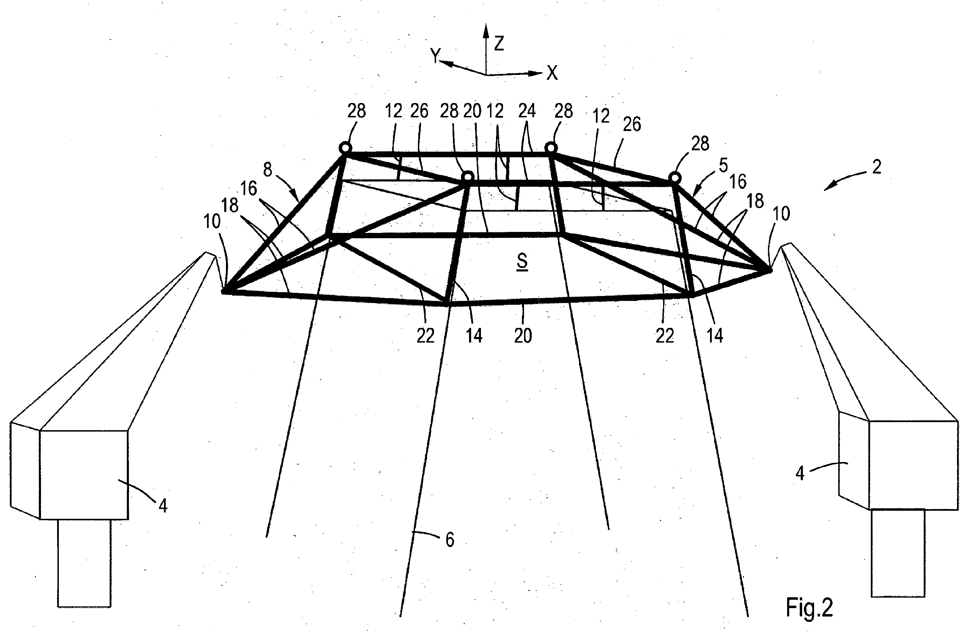

Fig. 1 is a side view, Fig. 2 is a perspective view. In both figures for explanatory purposes a Cartesian spatial reference axes is shown, with x- and y-axes in a horizontal direction and z-axis in a vertical direction (so that gravity acts along the axis). In the following, directions may refer to these axes.

Figs. 1 and 2 show a system 2 comprising two cranes 4 and an assembly 5 comprising a load 6 interconnected with a lifting jig 8 for lifting the load 6. The cranes 4, comprising movable booms 7, may be positioned on a common base (not shown), e.g. a quay, a vehicle or a vessel, or on different bases (not shown), e.g. one crane 4 being positioned on a vessel and the other crane 4 being positioned on another vessel or a quay, or two lorry cranes. The load 6 may comprise part of a wind power generator assembly, e.g. a so-called transition piece. The lifting jig may be - and here is - adapted for heavy loads, e.g. loads in excess of several tonnes of weight, in particular well in excess of tens to hundreds of weight; segments of wind farms that could be lifted and transferred with the presently provided lifting jig and method can easily weigh e.g. 200-500 tonnes apiece and may reach weights of about 1000 tonnes.

The lifting jig 8 has a centre of gravity C8, the load 6 has a centre of gravity C6, and as a result the assembly 5 has a centre of gravity C5. Here, the lifting jig 8 and the load are generally symmetric and the centres of gravity C5, C6, C8 lie on a common axis of symmetry A.

In the embodiment shown, the lifting jig 8 comprises two first connectors 10 for connecting the cranes 4 to the lifting jig 8 in positions on opposite sides of the lifting jig 8. The lifting jig 8 further comprises four second connectors 12 for connecting the lifting jig 8 to connectors 13 of the load 6. However, it is to be noted that more and/or differently positioned first connectors 10 may be provided and that more, less and/or differently positioned second connectors 12 may be provided.

Here, the lifting jig 8 comprises a generally rigid open frame. In particular, the lifting jig 8 comprises generally vertical beams 14, 16 and generally horizontal beams 18, 20, 22, 24, 26. The generally horizontal beams 18, 20, 22, 24, 26 may be divided in a first, relatively low, set of beams 18, 20, 22 and a second, relatively high, set of beams 24, 26. The generally vertical beams 14, 16 form struts which raise and support the second set of beams 24, 26 above the first set of beams 18, 20, 22. The horizontal beams 20 and 24 are generally parallel to each other (in x-direction) and the horizontal beams 22 and 26 are generally parallel to each other (in y-direction). The beams 20, 22, 24, 26 define a hollow trapezoidal shape with an interior space S. At least part of the load 6 can be received in the space S, as shown in Figs. 1-2. The beams 16, 18, provide lateral outriggers to the trapezoidal shape of the beams 20, 22, 24, 26.

It is noted that outriggers may come in various shapes and that other embodiments of lifting jigs according to the present disclosure may comprise more and/or differently shaped outriggers than the shown oblique pyramids lying down with apices pointing outward, e.g. to accommodate first connectors for connecting with more than two cranes and/or to account for a laterally shifted position of the centre of gravity of the assembly of the lifting jig and a load, the lateral shift (x and/or y directions) being with respect to particular first connectors. This facilitates balancing the hoisted assembly 5, increasing clearance for (a boom 7 of) a cranes 4 and/or increase lift capacity of a crane 4.

In the shown lifting jig 8, the first connectors 10 are positioned at or near end points of the horizontal beams 18 and diagonal beams 16, i.e. at or near the apices of the outriggers 16, 18, at a horizontal separation distance d10x. The first connectors 10 may comprise hooks, loops, shackles or other constructions, e.g. remotely operable latches opening or closing a loop so as to facilitate securing a connector of the crane 4 to the first connector.

The second connectors 12 are, in the shown embodiment, positioned opposite each other on the horizontal beams 24. Thus, the second connectors 12 are positioned well above the first connectors 10 by a vertical separation distance (along z-axis) dz generally determined by the vertical height of the struts 14, 16. The second connectors 12 are positioned with a first mutual horizontal separation distance d12x along the beams 24 and a second mutual horizontal separation distance d12y (not indicated in the Figures), generally determined by the length of the beams 26. As a result, the first and second connectors 10, 12, are horizontally separated by separation distances dx1012 and, respectively, dy1012 (not indicated in the Figures). In the shown embodiment, the first and second connectors 10, 12 are arranged symmetrically with respect to a vertical axis through the centre of gravity C5 of the assembly 5.

The second connectors 12 may comprise hooks, loops, etc. Here, the second connectors 12 comprise eyes and the load 6 comprises eyes, and the lifting jig 8 and the load 6 are connected together by bolting the eyes to one another. In another embodiment of the lifting jig 8, not shown, instead of plural eyes 12 a single connector may be provided, which may be mounted generally centrally within the lifting jig 8 with respect to the x and y directions, and a load may be suspended from such single connector. In general, mounting flanges for mounting segments of wind power generator to each other are strong enough to support the segments from the flanges. Thus, second connectors may comprise hooks, bolts, shackles and/or support structures having one or more portions that are matched to the segment to be lifted, e.g. comprising a flange of similar size as a mounting flange against which the load is to be mounted later on.

The lifting jig comprises optional third connectors 28 to which the cranes 4 may connect. The cranes 4 may comprise further cables, e.g. auxiliary cables next to the main hoisting cable(s) connected to the first connectors 10. These auxiliary cables may be connected first to the third connectors 28 prior to connecting the lifting jig 8 to the load 6 and when the top of the lifting jig 8 is below the maximum lifting height of the cranes 4 so that such connection of an auxiliary cable to the third connectors is (relatively) easy, see also below.

Further, in Fig. 1 optional ballast containers 30 of the lifting jig 8 are indicated, with which the position of the centre of gravity C8 of the lifting jig 8, and therewith the centre of gravity C5 of the entire assembly 5, may be adjusted e.g. shifted and/or lowered.

In exemplary use, the lifting jig 8 is arranged over (part of) the load 6, and the jig 8 and the load 6 are connected via the second connectors 12, forming the assembly 5. The hoisting devices 4 are connected to the first connectors 10 and the assembly 5 of lifting jig 8 and load 6 is lifted by suspending (the lifting jig 8 of) the assembly 5 by the first connectors 10 from the hoisting devices 4, and with the second connectors 12 positioned above the first connectors 10. As visible in Figs. 1-2, in this way the effective engagement points of the hoisting devices, such as cranes 4, onto the load 6 are transferred from the load 6 itself to the lifting jig 8.

Thus, by connecting the hoisting systems 4 to the first connectors 10 instead of to connectors 13 of the load 6, the engagement points where the hoisting systems 4 engages the object to be hoisted - i.e. the assembly 5 - are effectively lowered by the distance dz and the assembly 5 can be lifted with the cranes 4 whereas the load 6 can extend above the cranes 4. Yet, no auxiliary lifting structures halfway the load 6 need be made, which might interfere with design parameters optimised for use of the load 6 and not for lifting and transporting the load 6, whereas generally lifting connectors can readily be arranged on top of loads such as wind power generator towers, transition pieces and the like. Further, compared to the load connectors 13, the first connectors 10 are brought laterally outwards so that the booms 7 of the cranes 4 can be oriented in a relatively vertical direction which increases the effective operating range and the load bearing capacity of the cranes 4.

Next, the lifted assembly 5 can be lifted by hoisting from the first connectors, freely suspended from the cranes 4 and be transported to another location, e.g. by rotating one or both cranes 4. Thus, the load 6 may be transferred from a quay on board of a vessel, or, the load 6 may be transferred from a vessel onto a seabed. During suspension and/or transfer, the lifting jig 8 and/or load 6 can be controlled with additional cables etc. Note that the lifting jig and method can also be used onshore.

After placement of the load 6 onto a desired location, the second connectors 12 and the load connectors 6 are disconnected and the lifting jig 8 is removed from the load 6. If the load 6 is placed on a low surface, e.g. a sea bed in use offshore, the lifting jig 8 may be lifted off and over (the top of) the load 6 by suspending it from the third connectors 28. E.g. by connecting the main cables and/or optional auxiliary cables of the hoisting devices to the third connectors 28. In case auxiliary hoisting devices, e.g. auxiliary cables of the cranes 4 are used, the auxiliary cables may remain connected throughout significant parts of an operation. E.g. the auxiliary cables may be connected to the third connectors prior to arranging the lifting jig 8 and the load 6 with respect to each other and/or prior to lifting and/or transferring (the assembly 5 with) the load 6. By first connecting the auxiliary cables and leaving these connected, the lifting jig 8 may be hoisted after use by simply hoisting with the auxiliary cables without having to rearrange the main cables; the centre of gravity C8 of the lifting jig 8 is then below the third connectors.

Ballasting the lifting jig prior to lifting and transferring the lifting jig 8 from the load 6 facilitates to lower the centre of gravity C8 of the lifting jig 8 further below the third connectors 28 and in particular below the first connectors 10 making lifting by the first connectors easier. For this, optional ballast tanks 30 may be used that can be left empty during hoisting and transfer of the assembly 5 so as not to increase the weight of the assembly 5, and that can be filled with (sea) water ballast when desired. Also, or alternatively guiding and control cables etc. can be used to control position and/or orientation of the lifting jig 8.

The lifting jig may extend for any suitable height, in particular for about one half of or equal to the maximum achievable hook height of a crane. As an example, an offshore wind farm jacket may have height of about 50 m. Using a lifting jig of about 17-20 m height such jacket may be lifted with a crane having a maximum achievable hook height of 35 m and another similar or taller crane or other hoisting device.

Another example is erecting a 60 m refinery reactor column with two cranes having about 40 m hook height.

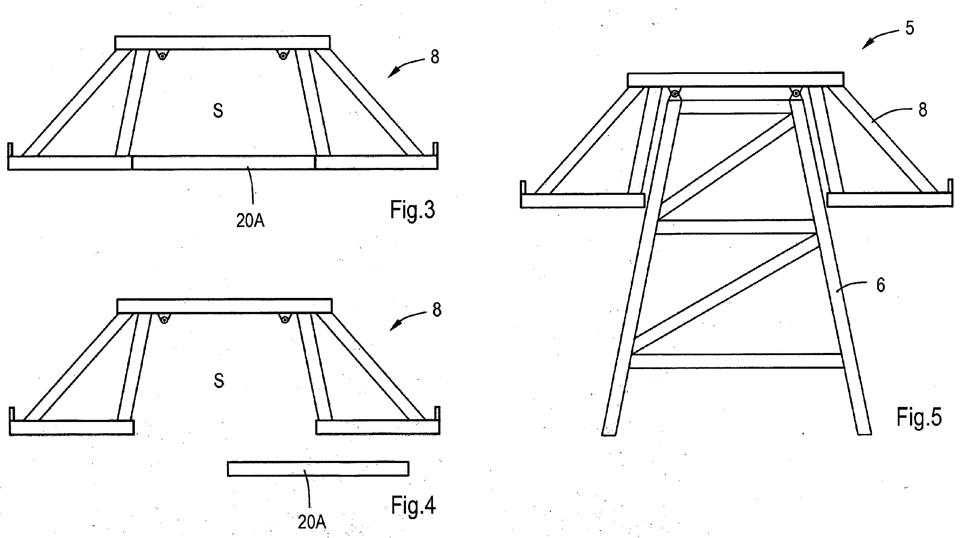

Figs. 3-5 show (use of) another embodiment of a lifting jig 8. This lifting jig 8 is generally similar to that of Figs. 1-2. However, here the lifting jig 8 is built to be readily disassembled at least partly to facilitate connecting a load 6 to the lifting jig 8. E.g., a horizontal beam 20A may be decoupled and removed (Figs. 3-4) so that the space S is accessible from the side to facilitate introduction of the load 6 into the space S (Figs. 4-5). Thereafter the removed beam 20A can be reconnected and (the assembly 5 with) the load 6 be lifted and transferred as indicted before. Instead of a removable portion, a hinging portion like a door may be provided. Note that the beams may have any suitable cross section, which may be constant or varying and instead of one or more beams (partly) hollow objects such as tubes may be used.

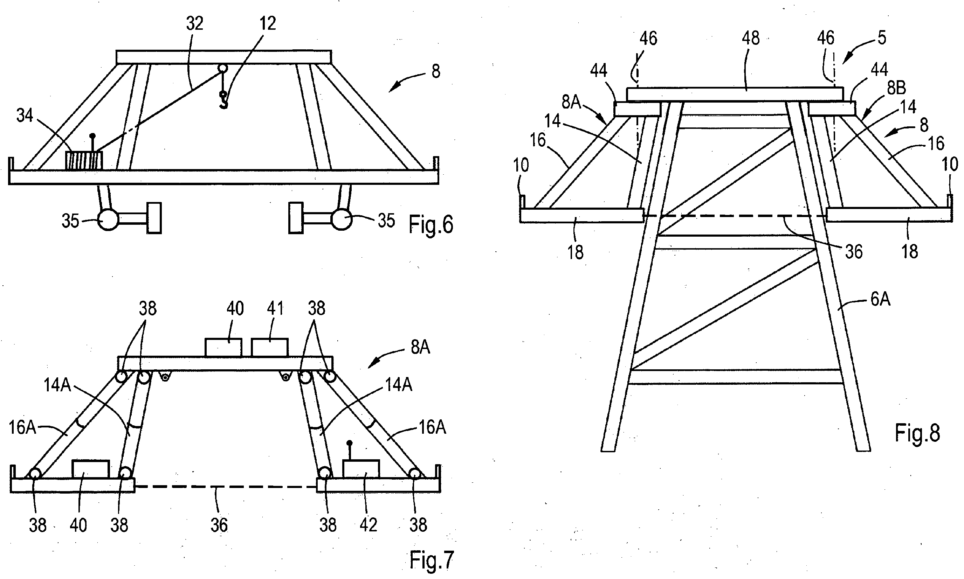

Fig. 6 shows another embodiment of a lifting jig 8, wherein the second connector 12 is formed height-variable with a hoisting cable or chain 32 attached to a remote-controlled winch 34. The cable 32 may be arranged in the centre horizontal of the lifting jig 8 and/or plural such connectors may be provided. The winch 34 may be provided with passive and/or active heave compensation. More and/or differently arranged cables/chains and winches etc. may be provided. This embodiment is further provided with optional gripping arms 35 which may serve for manipulating objects and/or for guiding and/or holding the jig 8 and a load 6 with respect to each other.

Fig. 7 shows another embodiment of a lifting jig 8, wherein, relative to the previously shown embodiments, horizontal beams 20 have been replaced by cables or chains 36, since these beams are primarily loaded in tension. Further, struts 14A, 16A, are provided as telescopic adjustable members being connected to other beams with hinges 38. Thus, the size and shape of the lifting jig 8 in z direction may be adapted. Also, or alternatively, the lifting jig 8 may be size and/or shape-adjustable in x and/or y direction, for which optional actuators 40 are provided. The size-/and/or shape adjustment preferably is, but need not be, symmetric, e.g. to balance the assembly 5 with respect to the first connectors 10. In an embodiment, such shape-adjustment may be employed for active and/or passive heave compensation. The lifting jig 8 further comprises a controller 41 configured to operate one or more selected ones of the first and second connectors 10, 12, between an open and a closed state, to connect or disconnect the respective connectors from respective associated connectors of the hoisting devices or the load, respectively. The lifting jig 8 also comprises position sensors 42 provided with a transmitter for relaying measured position data to a remote receiver.

Fig. 8 shows another embodiment of an assembly 5 comprising a lifting jig 8 and a load 6. Here, the load 6 comprises a wide-extending top flange 48, wherein the lifting jig 8 comprises a latch work of two parts 8A, 8B comprising rigid struts 14, 16, 18, first connectors 10 and second connectors 44 which are independently connected to (the flange 48 of) the load 6. The parts 8A, 8B are joined with flexible tension members 36. For lifting, such assembly 5 functions as described before.

The invention is not restricted to the above described embodiments which can be varied in a number of ways within the scope of the claims. For instance the lifting jig may be guided along one or more guides of a hoisting system for at least part of a trajectory of the'lifting jig and/or load for lifting and/or transfer.

More, less and/or differently arranged beams may be provided. Further, depending on the geometry of the lifting jig, the first and second connectors and the load, some parts of the lifting jig beams may be loaded in tension only; e.g. in case of the lifting jig of Figs 1-5, this may occur for the horizontal beams 18 and 28. In such case, instead of beams, (deformable) tension members may be used such as cables, chains etc. This can significantly reduce weight of the lifting rig compared to frame of beams. Also, instead of horizontal beams 24-26, the lifting jig 8 could be assembled and constructed onto the load, e.g. by directly connecting (top ends of) struts 16 to suitable portions of the load 6. E.g., Fig. 8 shows an embodiment of an assembly 5 comprising a lifting jig 8 and a load 6. Here, the load 6 comprises a wide-extending top flange 48, wherein the lifting jig 8 comprises a latch work of two parts 8A, 8B comprising rigid struts 14, 16, 18, first connectors 10 and second connectors 44 which are independently connected to (the flange 48 of) the load 6. The parts 8A, 8B are joined with flexible tension members 36. For lifting and transfer, such assembly 5 functions as described before. Disassembly may be done in total and/or in succession of the parts.

Elements and aspects discussed for or in relation with a particular embodiment may be suitably combined with elements and aspects of other embodiments, unless explicitly stated otherwise.

## Claims

1. A lifting jig (8) for lifting at least part of a load (6),
wherein the lifting jig comprises a plurality of first connectors (10) for connecting one or more hoisting devices (4), such as cranes (4), capstans, winches and/or tackles, to the lifting jig in plural positions,
in particular for connecting two or more hoisting devices; and
wherein the lifting jig comprises one or more second connectors (12) for connecting the lifting jig to a load, **characterised in that**, the lifting jig is configured to support the one or more second connectors above the first connectors when the lifting jig is suspended by the first connectors, in particular with the centre of gravity (C8) of the lifting jig being positioned above the first connectors.

2. The lifting jig (8) according to claim 1, wherein the lifting jig comprises one or more struts (14, 16), in particular a frame comprising one or more struts, extending generally in vertical direction and arranged for supporting the second connectors above the first connectors.

3. The lifting jig (8) according to any preceding claim, wherein at least some of the first and second connectors are separated from each other by a separation distance (dz, d10x, d12x, d12y,dx1012, dy1012) and wherein the separation distance is adjustable, wherein for example the lifting jig comprises one or more hoisting systems (32, 34) for hoisting one or more second connectors (12) with respect to one or more first connectors (10) and/or the lifting jig is deformable, e.g. having one or more deformable struts (14A, 16A), the adjustment preferably being remotely controllable.

4. The lifting jig (8) according to any preceding claim, wherein the lifting jig defines a space (S) for receiving at least part of the load and wherein in particular at least part (20, 36) of the lifting jig is arranged to be at least partly reversibly opened, deformed and/or disassembled for introducing at least part of the load into the space, in particular introducing in generally horizontal direction.

5. The lifting jig (8) according to any preceding claim, comprising one or more third connectors (28) for connecting one or more hoisting devices to the lifting jig, wherein the third connectors are positioned above the centre of gravity of the lifting jig, relative to its normal operating position, in particular at, near or above the second connectors.

6. The lifting jig (8) according to any preceding claim, comprising one or more controllers (41) configured to connect and/or disconnect one or more of the first connectors to/from a hoisting connector and/or configured to connect and/or disconnect one or more of the second connectors to/from a load connector.

7. The lifting jig (8) according to any preceding claim, comprising one or more ballasting systems (30), in particular comprising one or more ballast containers, more in particular liquid containers, e.g. for holding and/or scooping sea water.

8. The lifting jig (8) according to any preceding claim, comprising one or more sensors (42) and/or controllers, e.g. one or more seabed scanners, (video-)camera systems, transponders, motion and/or acceleration sensors, inclination sensors, position sensors and/or comprising at least one transmitter and/or receiver.

9. The lifting jig (8) according to any preceding claim, comprising at least one passive heave compensation system (40) and/or at least one active heave compensation system, in particular at least one of the passive and/or active heave compensation systems acting between the first and second connectors.

10. The lifting jig (8) according to any preceding claim, comprising at least part (35) of one or more grouting systems, guiding systems e.g. load guides and/or remotely operable actuators.

11. A method for lifting at least part of a load (6), comprising
providing one or more hoisting devices (4) having one or more hoisting connectors;
providing substantially rigid support members, such as rigid struts (14, 16), connected to first connectors (10) and second connectors (12, 44) and being adapted to support the load when that is connected to the second connectors, in particular being comprised in a lifting jig (8) according to any preceding claim; and wherein the method further comprises
connecting the hoisting devices to the first connectors and the load to the one or more second connectors, and
lifting at least part of the load by suspending the support members, in particular suspending the lifting jig, by the first connectors from the hoisting devices with the one or more second connectors positioned above the first connectors, in particular with the centre of gravity (C8) of the support members or the lifting jig (8) being positioned above the first connectors.

12. The method according to claim 11, comprising the step of forming at least part of the lifting jig (8) according to any one of claims 1-10 around at least part of the load (6) such that the lifting jig defines a space (S) receiving at least part of the load,
in particular comprising the steps of at least partially opening, deforming and/or disassembling the lifting jig, receiving at least part of the load in the space in the lifting jig, and closing, reforming and/or (re-)assembling the lifting jig;
and hoisting the formed lifting jig with the load.

13. The method according to claim 11 or 12, comprising connecting an elongated load (6) having a direction of elongation to the second connectors, and, by suspending from and hoisting with the hoisting devices the lifting jig by the first connectors, erecting the elongated load with respect to the direction of elongation
from a first orientation that is generally horizontal or has comparatively little inclination relative to a horizontal direction,
to a second orientation that is generally vertical or has comparatively large inclination relative to a horizontal direction.

14. The method according to any one of claims 11-13, comprising attaching an adjustable ballast weight (30) to the lifting jig (8) and/or the load (6) and/or applying a downward force to the lifting jig and/or the load.

15. The method according to any one of claims 11-14, comprising hoisting the lifting rig (8) of at least claim 8, possibly with a load (6) connected thereto, using plural controllable hoisting devices (4), further comprising operating at least one of the controllable hoisting devices (4) as a master hoisting device and another one of the controllable hoisting devices as a slave hoisting device (4) to the master hoisting device and/or to one or more signals from the lifting jig (8).

## Patentansprüche

1. Hebegestell (8) zum Heben von zumindest einem Teil einer Last (6),
wobei das Hebegestell eine Mehrzahl von ersten Verbindern (10) aufweist zum Verbinden einer oder mehr Hebevorrichtungen (4), z.B. Krane, Capstan-Winden, Winden und/oder Flaschenzüge, mit dem Hebegestell an mehreren Positionen,
insbesondere zum Verbinden zweier oder mehr Hebevorrichtungen, und wobei das Hebegestell einen oder mehr zweite Verbinder (12) aufweist zum Verbinden des Hebegestells mit einer Last, **dadurch gekennzeichnet, dass**
das Hebegestell eingerichtet ist, um den einen oder die mehreren zweiten Verbinder oberhalb der ersten Verbinder zu halten, wenn das Hebegestell mittels der ersten Verbindern aufgehängt ist, insbesondere wobei der Schwerpunkt (C8) des Hebegestells oberhalb der ersten Verbinder positioniert ist.

2. Hebegestell (8) gemäß Anspruch 1, wobei das Hebegestell aufweist eine oder mehr Streben (14, 16), insbesondere einen Rahmen, der eine oder mehr Streben aufweist, die sich im Wesentlichen in vertikaler Richtung erstrecken und zum Halten der zweiten Verbinder oberhalb der ersten Verbinder angeordnet sind.

3. Hebegestell (8) gemäß irgendeinem vorgenannten Anspruch, wobei mindestens einige der ersten und der zweiten Verbinder um eine Trennungsdistanz (dz, d10x, d12x, d12y, dx1012, dy1012) im Abstand voneinander angeordnet sind und wobei die Trennungsdistanz einstellbar ist, wobei z.B. das Hebegestell eine oder mehr Hebevorrichtungen (32, 34) aufweist zum Heben eines oder mehr zweiter Verbinder (12) in Bezug zu einem oder mehr ersten Verbindern (10), und/oder wobei das Hebegestell verformbar ist, z.B. weist es eine oder mehr verformbare Streben (14A, 16A) auf, wobei die Einstellung vorzugsweise fernsteuerbar ist.

4. Hebegestell (8) gemäß irgendeinem vorgenannten Anspruch, wobei das Hebegestell einen Raum (S) definiert zum Empfangen von mindestens einem Teil der Last und wobei insbesondere ein Teil (20, 36) des Hebegestells eingerichtet ist, um zumindest teilweise reversibel geöffnet, verformt und/oder demontiert zu sein zum Einführen von zumindest einem Teil der Last in den Raum, insbesondere zum Einführen in einer im Wesentlichen horizontalen Richtung.

5. Hebegestell (8) gemäß irgendeinem vorgenannten Anspruch, aufweisend einen oder mehr dritte Verbinder (28) zum Verbinden einer oder mehr Hebevorrichtungen mit dem Hebegestell, wobei die dritten Verbinder oberhalb des Schwerpunktes des Hebegestells angeordnet sind in Bezug zu seiner normalen Gebrauchsstellung, insbesondere an den, nahe oder oberhalb der zweiten Verbinder/n.

6. Hebegestell (8) gemäß irgendeinem vorgenannten Anspruch, aufweisend eine oder mehr Steuereinrichtungen (41), die eingerichtet sind, um einen oder mehr der ersten Verbinder mit/von einem Hebeverbinder zu verbinden/trennen, welcher eingerichtet ist, um einen oder mehr der zweiten Verbinder mit/von einem Lastverbinder zu verbinden/trennen.

7. Hebegestell (8) gemäß irgendeinem vorgenannten Anspruch, aufweisend eine oder mehr Ballastladevorrichtungen (30), insbesondere aufweisend einen oder mehr Ballastbehälter, insbesondere Flüssigkeitsbehälter, z.B. zum Aufnehmen und/oder Schöpfen von Meerwasser.

8. Hebegestell (8) gemäß irgendeinem vorgenannten Anspruch, aufweisend einen oder mehr Sensoren (42) und/oder Steuereinrichtungen, z.B. ein/eine/einen oder mehr Meeresgrund-Abtasteinrichtungen, (Video-) Kamera-Systeme, Transponder, Bewegungs- und/oder Beschleunigungssensoren, Neigungssensoren, Positionssensoren, und/oder aufweisend mindestens einen Sender und/oder Empfänger.

9. Hebegestell (8) gemäß irgendeinem vorgenannten Anspruch, aufweisend mindestens ein passives Hubkompensationssystem (40) und/oder mindestens ein aktives Hubkompensationssystem, wobei insbesondere mindestens eins von dem passiven und/oder dem aktiven Hubkompensationssystem zwischen den ersten und den zweiten Verbindern wirkt.

10. Hebegestell (8) gemäß irgendeinem vorgenannten Anspruch, aufweisend mindestens einen Teil (35) von einem/einer oder mehr Zement-Injektions-Systemen, Führungseinrichtungen, z.B. Lastführungen, und/oder fernbedienbaren Aktuatoren.

11. Verfahren zum Heben von zumindest einem Teil einer Last (6), aufweisend
Bereitstellen einer oder mehr Hebevorrichtungen (4), die einen oder mehr Hebeverbinder aufweisen,
Bereitstellen von im Wesentlichen starren Halteelementen, z.B. starren Streben (14, 16), die mit ersten Verbindern (10) und zweiten Verbindern (12, 44) verbunden sind und die geeignet sind, die Last zu tragen, wenn diese mit den zweiten Verbindern verbunden ist, insbesondere enthalten in einem Hebegestell (8) gemäß irgendeinem vorgenannten Anspruch, und wobei das Verfahren weiter aufweist
Verbinden der Hebeverbinder mit den ersten Verbindern und der Last mit dem einen oder mehr zweiten Verbindern und
Heben von zumindest einem Teil der Last durch Aufhängen der Halteelemente, insbesondere Aufhängen des Hebegestells, mittels der ersten Verbinder an den Hebevorrichtungen, wobei der eine oder die mehreren zweiten Verbinder oberhalb der ersten Verbinder angeordnet sind, insbesondere wobei der Schwerpunkt (C8) der Halteelemente oder des Hebegestells (8) oberhalb der ersten Verbinder positioniert ist.

12. Verfahren gemäß Anspruch 11, aufweisend den Schritt des Ausbildens mindestens eines Teils des Hebegestells (8) gemäß irgendeinem der Ansprüche 1-10 um mindestens einen Teil der Last (6) herum, sodass das Hebegestell einen Raum (S) definiert, welcher zumindest einen Teil der Last aufnimmt,
insbesondere aufweisend die Schritte eines zumindest teilweisen Öffnens, Verformens und/oder Demontierens des Hebegestells, Aufnehmens von zumindest einem Teil der Last in dem Raum in dem Hebegestell und Schließens, Zurückformens und/oder (Wieder-) Zusammenmontierens des Hebegestells
und eines Hebens des ausgebildeten Hebegestells mit der Ladung.

13. Verfahren gemäß Anspruch 11 oder 12, aufweisend ein Verbinden einer länglichen Last (6), die eine Längserstreckungsrichtung zu den zweiten Verbindern hat, und, durch Aufhängen an den Hebevorrichtungen mittels der ersten Verbinder und Heben des Hebegestells mittels der Hebevorrichtungen, ein Aufrichten der länglichen Last in Bezug zu der Längserstreckungsrichtung
von einer ersten Orientierung aus, die im Wesentlichen horizontal ist oder eine vergleichsweise geringe Neigung in Bezug zu einer horizontalen Richtung aufweist,
in eine zweite Orientierung, die im Wesentlichen vertikal ist oder eine vergleichsweise hohe Neigung in Bezug zu einer horizontalen Richtung aufweist.

14. Verfahren gemäß irgendeinem der Ansprüche 11-13, aufweisend ein Anbringen eines einstellbaren Ballastgewichtes (30) an dem Hebegestell (8) und/oder der Last (6) und/oder Aufbringen einer nach unten gerichteten Kraft auf das Hebestell und/oder die Last.

15. Verfahren gemäß irgendeinem der Ansprüche 11-14, aufweisend ein Heben des Hebegestells (8) gemäß zumindest Anspruch 8, wobei z.B. eine Last (6) damit verbunden ist, unter Verwendung von mehreren steuerbaren Hebevorrichtungen (4), weiter aufweisend ein Betreiben von mindestens einer der steuerbaren Hebevorrichtungen (4) als eine Master-Hebevorrichtung und einer weiteren der steuerbaren Hebevorrichtungen als eine Slave-Hebevorrichtung (4), die der Master-Hebevorrichtung und/oder einem oder mehreren Signalen von dem Hebegestell (8) folgt.

## Revendications

1. Gabarit de levage (8) pour lever au moins une partie d'une charge (6),
dans lequel le gabarit de levage comprend une pluralité de premiers connecteurs (10) pour raccorder un ou plusieurs dispositifs de levage (4) tels que des grues (4), des cabestans, des treuils et/ou des palans, au gabarit de levage dans plusieurs positions,
en particulier pour raccorder deux dispositifs de levage ou plus ; et
dans lequel le gabarit de levage comprend un ou plusieurs deuxièmes connecteurs (12) pour raccorder le gabarit de levage à une charge, **caractérisé en ce que**, le gabarit de levage est configuré pour supporter un ou plusieurs deuxièmes connecteurs au-dessus des premiers connecteurs lorsque le gabarit de levage est suspendu par les premiers connecteurs, en particulier avec le centre de gravité (C8) du gabarit de levage qui est positionné au-dessus des premiers connecteurs.

2. Gabarit de levage (8) selon la revendication 1, dans lequel le gabarit de levage comprend une ou plusieurs entretoises (14, 16), en particulier un bâti comprenant une ou plusieurs entretoises, s'étendant généralement dans la direction verticale et agencées pour supporter les deuxièmes connecteurs au-dessus des premiers connecteurs.

3. Gabarit de levage (8) selon l'une quelconque des revendications précédentes, dans lequel au moins certains des premiers et deuxièmes connecteurs sont séparés les uns des autres par une distance de séparation (dz, d10x, d12x, d12y, dx1012, dy1012) et dans lequel la distance de séparation est ajustable, dans lequel par exemple le gabarit de levage comprend un ou plusieurs systèmes de levage (32, 34) pour lever un ou plusieurs deuxièmes connecteurs (12) par rapport aux un ou plusieurs premiers connecteurs (10) et/ou le gabarit de levage est déformable, par exemple ayant une ou plusieurs entretoises déformables (14A, 16A), l'ajustement pouvant de préférence être contrôlé à distance.

4. Gabarit de levage (8) selon l'une quelconque des revendications précédentes, dans lequel le gabarit de levage définit un espace (S) pour recevoir au moins une partie de la charge et dans lequel, en particulier, au moins une partie (20, 36) du gabarit de levage est agencée pour être au moins partiellement ouverte de manière réversible, déformée et/ou démontée pour introduire au moins une partie de la charge dans l'espace, en particulier une introduction dans une direction généralement horizontale.

5. Gabarit de levage (8) selon l'une quelconque des revendications précédentes, comprenant un ou plusieurs troisièmes connecteurs (28) pour raccorder un ou plusieurs dispositifs de levage au gabarit de levage, dans lequel les troisièmes connecteurs sont positionnés au-dessus du centre de gravité de gabarit de levage, par rapport à sa position de fonctionnement normale, en particulier au niveau de, à proximité ou au-dessus des deuxièmes connecteurs.

6. Gabarit de levage (8) selon l'une quelconque des revendications précédentes, comprenant un ou plusieurs contrôleurs (41) configurés pour raccorder et/ou déconnecter un ou plusieurs des premiers connecteurs à/d'un connecteur de levage et/ou configurés pour raccorder et/ou déconnecter un ou plusieurs des deuxièmes connecteurs à/d'un connecteur de charge.

7. Gabarit de levage (8) selon l'une quelconque des revendications précédentes, comprenant un ou plusieurs systèmes de ballastage (30), en particulier comprenant un ou plusieurs contenants de ballast, encore plus particulièrement des contenants de liquide, par exemple pour contenir et/ou écoper l'eau de mer.

8. Gabarit de levage (8) selon l'une quelconque des revendications précédentes, comprenant un ou plusieurs capteurs (42) et/ou contrôleurs, par exemple un ou plusieurs scanners de lit marin, des systèmes de caméra (vidéo), des transpondeurs, des capteurs de mouvement et/ou d'accélération, des capteurs d'inclinaison, des capteurs de position et/ou comprenant au moins un émetteur et/ou un récepteur.

9. Gabarit de levage (8) selon l'une quelconque des revendications précédentes, comprenant au moins un système de compensation de pilonnement passif (40) et/ou au moins un système de compensation de pilonnement actif, en particulier au moins l'un parmi les systèmes de compensation de pilonnement passif et/ou actif agissant entre les premiers et deuxièmes connecteurs.

10. Gabarit de levage (8) selon l'une quelconque des revendications précédentes, comprenant au moins une partie (35) d'un ou de plusieurs systèmes de scellement, systèmes de guidage, par exemple des guides de charge et/ou des actionneurs pouvant être actionnés à distance.

11. Procédé pour lever au moins une partie d'une charge (6) comprenant les étapes consistant à :
prévoir un ou plusieurs dispositifs de levage (4) ayant un ou plusieurs connecteurs de levage ;
prévoir des éléments de support sensiblement rigides, telles que des entretoises rigides (14, 16), raccordés aux premiers connecteurs (10) et aux deuxièmes connecteurs (12, 44) et étant adaptés pour supporter la charge lorsque cette dernière a été raccordée aux deuxièmes connecteurs, en particulier étant compris dans un gabarit de levage (8) selon l'une quelconque des revendications précédentes, dans lequel le procédé comprend en outre les étapes consistant à :
raccorder les dispositifs de levage aux premiers connecteurs et la charge aux un ou plusieurs deuxièmes connecteurs, et
lever au moins une partie de la charge en suspendant les éléments de support, en particulier en suspendant le gabarit de levage, par les premiers connecteurs aux dispositifs de levage avec les un ou plusieurs deuxièmes connecteurs positionnés au-dessus des premiers connecteurs, en particulier avec le centre de gravité (C8) des éléments de support ou du gabarit de levage (8) qui est positionné au-dessus des premiers connecteurs.

12. Procédé selon la revendication 11, comprenant l'étape consistant à former au moins une partie du gabarit de levage (8) selon l'une quelconque des revendications 1 à 10, autour d'au moins une partie de la charge (6) de sorte que le gabarit de levage définit un espace (S) recevant au moins une partie de la charge,
en particulier comprenant les étapes consistant à ouvrir au moins partiellement, déformer et/ou démonter le gabarit de levage, recevoir au moins une partie de la charge dans l'espace dans le gabarit de levage, et fermer, reformer et/ou assembler (remonter) le gabarit de levage ;
et lever le gabarit de levage formé avec la charge.

13. Procédé selon la revendication 11 ou 12, comprenant l'étape consistant à raccorder une charge allongée (6) ayant une direction d'allongement vers les deuxièmes connecteurs, et en suspendant aux et en levant avec les dispositifs de levage, le gabarit de levage par les premiers connecteurs, dresser la charge allongée par rapport à la direction d'allongement,
à partir d'une première orientation qui est généralement horizontale ou a une inclinaison relativement faible par rapport à une direction horizontale,
jusqu'à une seconde orientation qui est généralement verticale ou a une inclinaison relativement importante par rapport à une direction horizontale.

14. Procédé selon l'une quelconque des revendications 11 à 13, comprenant l'étape consistant à fixer un poids de ballast ajustable (30) au gabarit de levage (8) et/ou à la charge (6) et/ou appliquer une force descendante sur le gabarit de levage et/ou la charge.

15. Procédé selon l'une quelconque des revendications 11 à 14, comprenant l'étape consistant à lever le gabarit de levage (8) au moins selon la revendication 8, éventuellement avec une charge (6) raccordée à ce dernier, à l'aide de plusieurs dispositifs de levage contrôlables (4), comprenant en outre l'étape consistant à actionner au moins l'un des dispositifs de levage contrôlables (4) en tant que dispositif de levage maître et un autre des dispositifs de levage contrôlables en tant que dispositif de levage esclave (4) par rapport au dispositif de levage maître et/ou par rapport aux un ou plusieurs signaux provenant du gabarit de levage (8).
